# EUROPÄISCHE PATENTSCHRIFT

(11) **EP 1 195 113 B1**
(45) Veröffentlichungstag und Bekanntmachung des Hinweises auf die Patenterteilung: **13.04.2005**
(21) Anmeldenummer: 00121781.9
(22) Anmeldetag: 05.10.2000
(51) Int. Cl.: A47B 5/04, A47B 5/06, B64D 11/00

(54) **Ausklappbarer Wandtisch**
Folding wall table
Table du type escamotable

(43) Veröffentlichungstag der Anmeldung: 10.04.2002
(73) Patentinhaber: Lufthansa Technik AG, 22335 Hamburg (DE)
(72) Erfinder: Ollenschläger, Jon, 22851 Norderstedt (DE)
(74) Vertreter: Glawe, Delfs, Moll & Partner

(56) Entgegenhaltungen:
- DE-A- 19 808 772
- DE-A- 19 822 694
- FR-A- 1 171 790
- JP-A- 11 155 643
- US-A- 1 511 925
- US-A- 1 796 002
- US-A- 1 937 386
- US-A- 5 069 142
- US-A- 5 487 342

## Beschreibung

Die Erfindung betrifft einen Tisch zur Anbringung an der Wand eines Flugzeugs oder dergleichen, mit einer Tischplatte, die von einem im wesentlichen parallel zur Wand vorzugsweise senkrecht ausgerichteten Ruhezustand in einen im wesentlichen horizontalen Nutzzustand schwenkbar ist. Eine Ausbildung der Erfindung betrifft einen solchen Tisch mit einer Tischplatte aus wenigstens zwei relativ zueinander klappbaren Tischplattensegmenten.

Es sind Seitenwandtische für Flugzeuge bekannt, die im Ruhezustand in einem Gehäuse an der Seitenwand eines Flugzeugs verstaubar sind. Die Tischplatte ist mit Hilfe einer vertikalen Führung nach oben aus dem Gehäuse herausziehbar und kann dann seitlich in die horizontale Ebene ausgeklappt werden. Es sind derartige Seitenwandtische bekannt, die zwei mit Hilfe eines Scharniers verbundene Tischplattensegmente umfassen, um eine Tischlänge zu erzielen, die etwa einer Flugzeugsitzbreite entspricht. Im ausgeklappten Zustand werden die Tischplattensegmente mithilfe eines flachen, handbetätigten Schiebers unterstützt. Der Schieber ist im Nutzzustand unterhalb der Tischplatte angeordnet und kann von einer Stellung unterhalb des wandseitigen Tischplattensegments in eine beide Tischplattensegmente untergreifende Stellung verschoben werden.

Aus der DE 86 00 534 U1 ist ein Klapptisch für die Anbringung an einer Wand in Wohnmobilen bekannt, dessen Tischplatte an der Innenseite der Wand angelenkt und in heruntergeklappter Ruhestellung von der Wand bündig aufgenommen ist, während sie in ihrer horizontalen Gebrauchslage über ein Teleskopstützbein gegen den Boden abgestützt ist. Die Tischplatte besteht aus zwei Plattenteilen, die miteinander über Verbindungsgelenke relativ zueinander klappbar gekuppelt sind. An der Unterseite der Tischplatte sind Tragprofile vorgesehen, die zwischen einer eingeschobenen Stellung, bei der sie unterhalb des wandnahen Plattenteils liegen, in eine Stellung manuell ausziehbar sind, in der sie das wandferne Plattenteil über den größten Teil seiner Länge unterstützen. In der ausgeklappten Stellung entspricht die Tischlänge der Länge einer Sitzbank mit zwei Sitzplätzen. Die Länge eines Plattenteils entspricht etwa dem Abstand der wandseitigen Anlenkstelle vom Fahrzeugboden.

Die Aufgabe der Erfindung besteht darin, bei hohem Bedienungskomfort den optischen Eindruck der Tischanordnung zu verbessern.

Gemäß der Erfindung bildet wenigstens ein Teil der Tischplatte im Ruhezustand eine Abschlussblende einer Öffnung eines den Tisch im Ruhezustand aufnehmenden Gehäuses. Im Nutzzustand deckt eine separate Blende diese Gehäuseöffnung wenigstens teilweise ab, wobei diese separate Blende durch das Schwenken des Tisches vom Ruhe- in den Nutzzustand automatisch in ihre die Gehäuseöffnung abdeckende Stellung verfahrbar ist.

Zunächst seien einige der verwendeten Begriffe erläutert.

Die Anbringung des Tisches an der Wand eines Flugzeugs oder dergleichen betrifft gleichermaßen die Außenwand des Rumpfes oder im Inneren des Rumpfes angeordnete Wände. Umfasst sind Wände mit einer gewissen Neigung zur Vertikalen, wie sie beispielsweise infolge der gekrümmten Bordwand des Flugzeugrumpfes auftreten. Im Ruhezustand befinden sich die Tischplattensegmente im wesentlichen parallel zur entsprechenden Wand. Der Begriff parallel ist großzügig aufzufassen; im Mittel kann der von den Tischplattensegmenten mit der Wand eingeschlossene Winkel durchaus bis zu 20° oder sogar bis zu 40° betragen. Generell ist eine etwa vertikale Ausrichtung der Tischplattensegmente im Ruhezustand von der Erfindung umfasst.

Der Begriff "schwenkbar" ist nicht auf raumfeste Schwenkachsen beschränkt. Im allgemeinen fällt darunter eine beliebige Bewegung, die mindestens einen rotatorischen Freiheitsgrad enthält.

Die Tischplatte kann im Ruhezustand in einem der entsprechenden Wand vorgelagerten Gehäuse untergebracht sein. Sie kann auch vollständig in der Wand selbst untergebracht sein, beispielsweise zwischen der Außenwand und der Innenverkleidung eines Flugzeugrumpfes. Zu diesem Zweck kann eine Mulde zur Aufnahme der Tischplatte in die Verkleidung eingelassen sein; dies ist jedoch nicht notwendig, falls beispielsweise lediglich eine Öffnung in der Innenverkleidung vorgesehen ist. Die Erfindung erfordert kein geschlossenes Gehäuse, sondern genauer lediglich ein etwa parallel zur Wand angeordnetes oder von der Wand oder Wandverkleidung gebildetes Gehäuseteil mit einer Öffnung, durch die die Tischplatte ein- und ausschwenkbar ist. Parallel ist dabei im zuvor beschriebenen Sinne großzügig zu verstehen.

Je nach Anordnung kann ein beliebiger Teil der Tischplatte im Ruhezustand die Abschlussblende bilden. Besteht die Tischplatte aus zwei Segmenten, kann es sich sowohl um das wandferne als auch um das wandnahe Segment handeln. Bei einer einteiligen Tischplatte kann die gesamte Tischplatte oder nur ein Teil davon die Abschlussblende bilden. "Separate Blende" bedeutet ein zusätzlich zur eigentlichen Tischplatte vorgesehenes Teil. Die separate Blende wird also nicht von der eigentlichen Tischplatte oder einem Teil davon gebildet.

Die Erfindung bewirkt, dass nicht nur im Ruhezustand des Tisches ein optisch ansprechender und den dahinter liegenden Raum schützender Abschluss der Gehäuseöffnung zur Flugzeugkabine hin erzielt wird, sondern insbesondere auch im Nutzzustand, bei dem der die Tischplatte im Ruhezustand aufnehmende Raum nicht mehr durch die Tischplatte abgedeckt ist. Erfindungsgemäß wird der unvorteilhafte Eindruck einer gähnenden Öffnung vermieden. Der entsprechende Raum und die darin angeordnete Mechanik werden durch den Abschluss mit Hilfe einer separaten Blende vor Verschmutzungen geschützt. Diese Vorteile werden automatisch durch das Versetzen des Tisches vom Ruhe- in den Nutzzustand erreicht, ohne dass es weiterer, den Bedienungskomfort beeinträchtigender Handgriffe bedarf. Dieser Aspekt ist besonders dann bedeutsam, wenn die Gehäuseöffnung unterhalb der ausgeschwenkten Tischplatte angeordnet und somit im Nutzungszustand unzugänglich ist, so dass eine manuelle Betätigung der Blende eine unzumutbare Erschwernis darstellen würde.

Der Erfolg der Erfindung wird bereits erzielt, wenn die Gehäuseöffnung nur teilweise im Nutzzustand abgedeckt wird. Beispielsweise kann es bei einer unterhalb der ausgeschwenkten Tischplatte angeordneten Gehäuseöffnung entbehrlich sein, den Öffnungsbereich unterhalb der Tischplatte, der vom Benutzer nicht einsehbar ist, abzudecken. Der optische Eindruck einer gähnenden Öffnung wird dann bereits durch die Abdeckung des unteren Teils der Gehäuseöffnung vermieden.

Das Verfahren der separaten Blende in ihre die Gehäuseöffnung abdeckende Stellung durch das Schwenken des Tisches vom Ruhe- in den Nutzzustand ist analog zum automatischen Verfahren der Verriegelungseinrichtung in die Verriegelungsstellung gemäß dem oben beschriebenen ersten Aspekt der Erfindung zu sehen. Die dort gemachten Ausführungen können auf das automatische Verfahren der separaten Blende sinngemäß übertragen.werden. Nach einer bevorzugten Ausführungsform ist das Verfahren der separaten Blende kinematisch gekoppelt mit dem Versetzen des Tisches vom Ruhe- in den Nutzzustand und/oder umgekehrt. Natürlich ist alternativ eine automatische Betätigung mithilfe von Fremdkraft möglich.

Die optische Wirkung der Erfindung wird noch verbessert, wenn die Gehäuseöffnung durch die separate Blende im Nutzzustand bündig abgeschlossen wird. Gleiches gilt für den bündigen Abschluss der Öffnung im Ruhezustand durch den entsprechenden Teil der Tischplatte. Die separate Blende ist vorzugsweise optisch hochwertig gestaltet, zumindest auf der der Flugzeugkabine zugewandten Seite. Sie kann beispielsweise der optischen Gestaltung der Tischplatte angepasst sein.

In einer bevorzugten Ausführungsform wird die separate Blende gleichzeitig zur Unterstützung der Tischplatte benutzt. Dies betrifft einerseits das Halten der Tischplatte im Nutzzustand. Insbesondere bei mehrsegmentigen Tischplatten kann auch der Aufbauvorgang des Tisches durch eine entsprechende Unterstützung erleichtert werden, in dem wenigstens ein Teil des zu stützenden Tischplattengewichts von der Unterstützung aufgenommen wird. Vorteilhafterweise folgt diese Unterstützung mit Hilfe von Fremdkraft, die beispielsweise von einer vorgespannten Feder erzeugt wird. Vorteilhafterweise sind die Einrichtungen zur Erzeugung der Fremdkraft mindestens im unteren Bereich des Gehäuses im Gehäuseinneren angeordnet. Sie werden dann von der separaten Blende verdeckt und erwecken keinen störenden Eindruck. Jedoch kann es vorteilhaft sein, die Unterstützung an einem vor der separaten Blende befindlichen Punkt an der Tischplatte angreifen zu lassen, um die Unterstützungswirkung zu verbessern. Dies muss den optischen Eindruck nicht schmälern, da der Bereich unterhalb der Tischplatte nicht einsehbar ist.

In der Ruhestellung des Tisches nimmt die separate Blende eine Position ein, die von ihrer die Gehäuseöffnung abdeckenden Stellung verschieden ist, die im Ruhezustand von einem Teil der Tischplatte eingenommen wird. Zweckmäßigerweise ist die Position der separaten Blende in der Ruhestellung etwa parallel zur Wand ausgerichtet, um eine platzsparende Anordnung zu ermöglichen.

Bei einer vorteilhaften Ausführungsform ist die Dicke der Tischplatte nicht konstant, sondern nimmt von den Längsseiten zur Tischmitte hin zu. Während also im sichtbaren Tischkantenbereich der Eindruck einer dünnen, leichten Tischplatte vermittelt wird, ist die Steifigkeit und Festigkeit der Tischplatte wesentlich erhöht. Die Dicke der Tischplatte liegt in der Tischmitte mindestens um einen Faktor 1.5, vorzugsweise einen Faktor 2, vorzugsweise etwa einen Faktor 2.5 über der Dicke an den Längskanten. Am wandfernen Ende kann die Tischplatte abgeflacht sein, um auch hier den Eindruck einer flachen Tischplatte zu erzielen. Im allgemeinen soll die Zunahme der Tischplattendicke über mindestens 50 %, vorzugsweise mindestens 70 %, vorzugsweise mindestens 90 % der Tischlänge vorgesehen sein.

Im Hinblick auf die Steifigkeit und Festigkeit der Tischplatte ist eine konvexe Wölbung der Tischplatte an deren Unterseite bevorzugt.

Das geschilderte Merkmal der zur Mitte hin zunehmenden Tischplattendicke ist besonders für Tische ohne ein wandfernen angeordnetes Tischbein von Vorteil, bei der eine Abstützung des wandfernen Tischplattensegments ausschließlich am wandnahen Tischplattensegment erfolgt. Das geschilderte Merkmal ist gegebenenfalls eigenständig schutzwürdig.

Gemäß einer weiteren Ausführung der Erfindung kann die Tischplatte wenigstens zwei relativ zueinander klappbare Tischplattensegmente aufweisen, wobei eine Verriegelungseinrichtung zur miteinander fluchtenden Verriegelung der Tischplattensegmente vorgesehen ist, die durch das Versetzen des Tisches vom Ruhe- in den Nutzzustand automatisch in die Verriegelungsstellung fährt. Vorzugsweise gilt entsprechendes umgekehrt für die Entriegelung der Verriegelungseinrichtung.

Die Verriegelung der Tischplattensegmente erfolgt im miteinander fluchtenden Zustand derselben, was vorrangig auf die Nutzseite des Tisches, d. h. seine Oberseite im Nutzzustand, bezogen ist.

Der Begriff "Verriegelung" bedeutet das Halten von zwei Tischplattensegmenten in einer miteinander fluchtenden Position. Der Begriff kann eine Unterstützung des wandfernen Plattensegments und damit eine Entlastung der Klappverbindung umfassen. Der Begriff umfasst auch die Sicherung der beiden Tischplattensegmente gegenüber einem unbeabsichtigten Zusammenklappen.

Die automatische Verriegelung "durch das Versetzen des Tisches" ist nicht auf eine bestimmte zeitliche Abfolge der Verriegelung im Verhältnis zum Versetzen des Tisches oder eines Tischplattensegmentes beschränkt. Insbesondere können diese Vorgänge zwar zeitlich parallel erfolgen, sie müssen es jedoch nicht. Es ist lediglich gefordert, dass die Verriegelung aufgrund der Versetzung des Tisches in den Nutzzustand erfolgt. Dies kann beispielsweise auch unmittelbar im Anschluss an das vollständige Ausklappen der beiden Tischplattensegmente zueinander erfolgen. Selbst eine Verriegelung mit zeitlichem Abstand zum Versetzen des Tisches in den Nutzzustand ist von der Erfindung umfasst, sofern nur ein kausaler Zusammenhang besteht. Die zeitliche Dauer des Verriegelungsvorgangs ist nicht festgelegt; sie kann auch zeitlich punktuell erfolgen.

Das Versetzen des Tisches im Sinne der Erfindung kann insbesondere das Schwenken der beiden Tischplattensegmente zueinander und/oder das Schwenken der Tischplatte relativ zur Wand betreffen. Bei längeren Tischen ist häufig ein klappbares Tischbein zur wandfernen Abstützung der Tischplatte am Boden vorgesehen. Das Ausklappen des Tischbeins ist dann Teil des Versetzens des Tisches vom Ruhe- in den Nutzzustand. Der Begriff "Versetzen" ist jedoch weder auf die genannten noch überhaupt auf Schwenkbewegungen beschränkt. Beispielsweise kann das Tischbein teleskopartig ein- und ausziehbar sein und die Verriegelung durch diese Verschiebung automatisch erfolgen.

Bei einer aus wenigstens zwei Tischplattensegmenten gebildeten Tischplatte ist eine Unterstützung des wandfernen Segments und eine Sicherung gegenüber dem Zurückklappen zweckmäßig. Dies gilt insbesondere für längere Tischplatten; die sich beispielsweise über eine zwei oder mehr Plätzen entsprechende Länge erstrecken. Die Erfindung hat erkannt, dass das lastige und zeitaufwendige manuelle Betätigen eines Verriegelungselementes entfällt, wenn die Verriegelung automatisch durch das ohnehin erforderliche Versetzen des Tisches vom Ruhe- in den Nutzzustand erfolgt. Über diesen Vorgang hinaus sind keine weiteren Handgriffe zur Verriegelung erforderlich, was den Bedienungskomfort erhöht.

Die automatische Verriegelung kann bei einer Ausführungsform mit Hilfe einer kinematischen Koppelung zwischen der Bewegung des Tisches vom Ruhe- in den Nutzzustand und der Verriegelungseinrichtung erfolgen. Dies bedeutet, dass mindestens ein Teil der Bewegung des Tisches mechanisch in eine entsprechende Bewegung der Verriegelungseinrichtung umgesetzt wird. Bei der zugrunde liegenden Tischbewegung kann es sich beispielsweise um das Ausschwenken der Tischplatte oder deren Segmente handeln. Die Verriegelung kann auch kinematisch an das Ausklappen oder Ausziehen eines klappbaren und/oder ausziehbaren Tischbeins gekoppelt sein, was zweckmäßig sein kann, da das Abklappen und/oder Ausziehen des Tischbeins häufig das Versetzen des Tisches in den Nutzzustand beendet.

Vorteilhafterweise erfolgt auch die Entriegelung der Verriegelungseinrichtung automatisch beim Versetzen des Tisches vom Nutz- in den Ruhezustand. Beispielsweise kann die Entriegelung an das Einklappen oder Einschieben einer Fußstütze vor dem Einschwenken des Tisches kinematisch gekoppelt sein. Die Entriegelung kann auch zu Beginn des Einschwenkens der gesamten noch verriegelten Tischplatte über kinematische Koppelung erfolgen, beispielsweise wenn keine klappbare Fußstütze vorgesehen ist.

Bei der kinematischen Koppelung der Verriegelung wird ein Teil der vom Benutzer zum Ausschwenken des Tisches aufgeendeten Kraft für die Betätigung der Verriegelungseinrichtung genutzt. Statt dessen kann die Verriegelungseinrichtung auch mit Hilfe von Fremdkraftin die Verriegelungsstellung und/oder in die Entriegelungsstellung gebracht werden. Das Versetzen des Tisches vom Ruhe- in den Nutzzustand löst dann zu einem gewissen Zeitpunkt die Fremdkraftbetätigung der Verriegelungseinrichtung aus. Zum Zeitpunkt der Auslösung befinden sich die beiden Tischplattensegmente in einer miteinander fluchtenden Stellung. Die Auslösung kann beispielsweise infolge einer Schwenkbewegung, beispielsweise eines Tischbeins erfolgen. Die Verriegelung kann auch automatisch infolge der räumlichen Gestaltung der Verriegelungseinrichtung zum Zeitpunkt des Fluchtens der beiden Tischplattensegmente miteinander erfolgen, ohne dass es einer Auslösung bedarf. Entsprechendes gilt analog für die automatische Entriegelung mithilfe von Fremdkraft.

Die Fremdkraft kann mechanisch oder elektrisch erzeugt werden. Vorzugsweise wird die Fremdkraft durch ein vorgespanntes Federelement erzeugt. Die Vorspannung kann beispielsweise durch das Versetzen des Tisches vom Nutz- in den Ruhezustand erzeugt werden, so dass die Fremdkraft beim darauffolgenden Ausschwenken des Tisches zur Verriegelung zur Verfügung steht. Diese Anordnung hat den Vorteil, dass die zur Verriegelung aufzuwendende Energie wiederum aus der ohnehin notwendigen Bewegung des Tisches gewonnen wird. Auf zusätzliche Einrichtungen, beispielsweise elektrische Versorgung im Falle einer elektrisch betriebenen Verriegelung kann daher verzichtet werden.

Die Verriegelungseinrichtung ist nicht auf bestimmte Ausführungsformen oder Materialien beschränkt; das Merkmal der Verriegelung ist vielmehr funktional im oben genannten Sinne zu verstehen. Es kann sich beispielsweise um Stangen oder Rohre (allgemeiner Verriegelungselemente) handeln, die zweckmäßigerweise in entsprechenden Führungen, bspw. konzentrischen Rohren geführt sind. Diese Ausführungen haben gegenüber flachen Riegeln den Vorzug einer erhöhten Biege-steifigkeit und Festigkeit. Die Verriegelungselemente verlaufen zweckmäßigerweise parallel zur Längsachse des Tisches und sind im entriegelten Zustand einem der beiden Segmente zugeordnet, während sie im verriegelten Zustand beide Segmente über eine bestimmte Länge übergreifen. Der Fachmann kann ohne weiteres ermitteln, wie weit die Verriegelungselemente zur Erfüllung der Verriegelungsfunktion in die Tischplattensegmente jeweils hineinragen müssen.

Vorzugsweise ist die Verriegelungseinrichtung im Inneren der Tischplatte angeordnet. Es sind dann keine über die Tischplatte überstehenden Einrichtungen vorhanden. Auch an der Unterseite der Tischplatte könnte dies stören, jedenfalls wenn die Unterseite eines Tischplattensegments in der Ruhestellung zur Flugzeugkabine hin weist oder in der Nutzstellung die Beinfreiheit einschränkt.

Im folgenden wird die Erfindung anhand vorteilhafter Ausführungsbeispiele mit Bezug auf die beigefügten Zeichnungen erläutert. Es zeigen:
- Fig. 1: seitlicher Querschnitt eines Wandtisches mit Tischbein beim Schwenken der Tischplatte
- Fig. 2: Ansicht der Fig. 1 im Nutzzustand des Tisches
- Fig. 3: Schnitt durch das wandnahe Tischplattensegment der Fig. 1 parallel zur Nutzfläche
- Fig. 4: Schnitt durch die Tischplatte der Fig. 2 parallel zur Nutzfläche
- Fig. 5: seitlicher Querschnitt eines Wandtisches ohne Tischbein in Ruhestellung
- Fig. 6: Ansicht der Fig. 5 im Nutzzustand des Tisches
- Fig. 7: Ansicht der Tischplatte der Fig. 6 von rechts

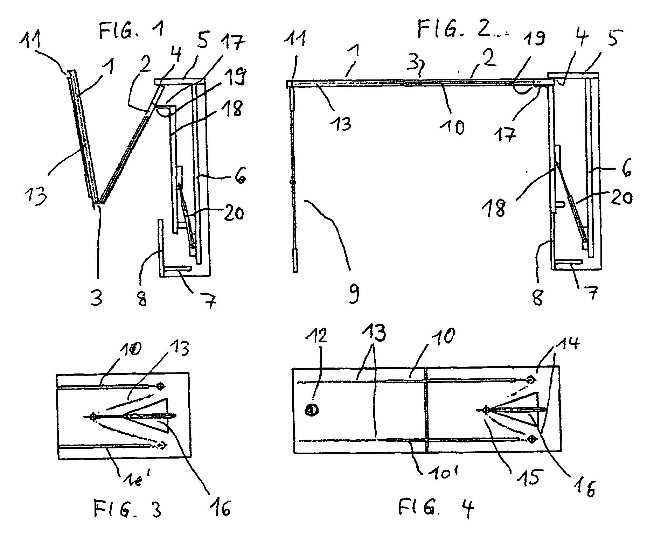

Die Ausführungsform gemäß den Fig. 1 bis 4 betrifft einen Wandtisch mit einem Tischbein. Die Tischplatte besteht aus einem wandfernen Tischplattensegment 1 und einem wandnahen Tischplattensegment 2, die über ein Scharnier oder Gelenk 3 klappbar miteinander verbunden sind. An der der Verbindungsseite 3 gegenüberliegenden Seite ist das wandnahe Tischplattensegment 2 über ein Scharnier oder Gelenk 4 mit einem Rahmenteil 5 klappbar verbunden. Die Rahmenteile 5 bis 8 bilden ein Gehäuse, das an der Wand eines Flugzeugs, Bahnwaggons oder dergleichen angeordnet ist. Das Gehäuse 5 bis 8 kann an der Innenwand eines Flugzeugrumpfes angeordnet sein und dieser vorgelagert sein. Das Gehäuse 5 bis 8 kann auch in die Wand eingelagert sein, so daß beispielsweise das Gehäuseteil 8 mit der Innenverkleidung der Flugzeugwand etwa fluchtet.

Im Inneren der Tischplatte 1, 2 sind zwei Rohre 10, 10' innerhalb zweier Führungsrohre längs verschiebbar geführt. Die einem Rohr 10, 10' zugeordneten Führungsrohre der Segmente 1, 2 fluchten miteinander in einer Stellung, in der die Nutzseiten der Segmente 1, 2 miteinander fluchten. In dem in Fig. 2 gezeigten Nutzzustand ist jedes Rohr 10, 10' jeweils etwa zur Hälfte in entsprechende Führungsrohre der Segmente 1 und 2 hineingeschoben, wobei es die Segmente 1, 2 übergreift. Im Nutzzustand des Tisches verriegeln daher die Rohre 10, 10' die Segmente 1 und 2 in einer Stellung, in der die Nutzseiten der Segmente 1, 2 miteinander fluchten. Ein im Nutzzustand ungewolltes Verschwenken der Segmente 1 und 2 gegeneinander ist dadurch verhindert. Belastungen der Tischplatte bspw. infolge Benutzung werden von den Rohren 10, 10' aufgenommen und damit das Scharnier 3 und die Verbindung der beiden Segmente 1, 2 entlastet.

In dem in Fig. 2 gezeigten Nutzzustand wird die Tischplatte 1, 2 mit Hilfe des Tischbeins 9 am wandfernen Ende abgestützt, so daß Tischplatte 1, 2 im horizontalen Zustand gehalten wird. Das Tischbein ist teleskopartig ein- und ausziehbar und befindet sich im Nutzzustand in einer ausgezogenen Stellung.

In dem in Fig. 1 gezeigten entriegelten Zustand sind die Rohre 10, 10' vollständig in das wandnahe Segment 2 zurückgezogen. Die Segmente 1, 2 sind daher frei um die Achse 3 klappbar.

In dem nicht gezeigten Ruhezustand des Tisches, der sich aus dem in Fig. 1 gezeigten Zwischenzustand durch vollständiges Einklappen der Segmente 1, 2 um die Scharniere 3 und 4 ergibt, verschließt das Segment 1 die Öffnung des Gehäuses 5 bis 8 bündig. Die Unterseite des Segments 1 fluchtet mit der Außenseite des Gehäuseteils 8. Die Unterseite bezeichnet allgemein die der Nutzseite gegenüberliegende Seite. Das Tischbein 9 ist in der eingezogenen Stellung und um ein Scharnier oder Gelenk 11 an die Unterseite des Segements 1 angeklappt. Vorzugsweise ist das eingeklappte Tischbein 9 in das Tischplattensegment 1 versenkt und steht nicht über die Oberfläche hinaus, so daß auch insoweit ein bündiger Abschluß erzielt wird. Am wandfernen Ende des Segments 1 ist an der Unterseite eine Handhabe 12 eingelassen, mit Hilfe derer das Segment 1 aus der Ruhestellung zur Flugzeugkabine hin herausziehbar ist.

Die Verbindung 4 des wandnahen Plattensegments 2 mit dem Gehäuse 5 - 8 ist translatorisch fest, d. h. insbesondere nicht - wie bekannt - vertikal verschiebbar. Der Verzicht auf eine vertikale Führung bedeutet einen verringerten Herstellungsaufwand. Die Klappverbindung 4 befindet sich im allgemeinen etwa auf der Höhe der Tischplatte im Nutzzustand. Im Ausführungsbeispiel der Fig. 1 bis 4 befindet sie sich auf der Höhe der Nutzseite der Tischplatte im Nutzzustand. Das wandseitige Plattensegment 2 ist in den gezeigten Ausführungsbeispielen vom Nutzzustand nach unten in den Ruhezustand klappbar. Dies hat bei einer zweisegmentigen Tischplatte den Vorteil, daß im Ruhezustand die zur Flugzeugkabine hin weisende Seite des wandfernen Plattensegments 1 von dessen Unterseite gebildet wird. Die zum Herausziehen der Tischplatte aus dem Ruhezustand vorgesehene Handhabe 12 ist daher an der Unterseite der Tischplatte angeordnet, während sie auf der Nutzseite der Tischplatte stören würde. Dementsprechend kann es bspw. bei einer einteiligen oder dreiteiligen Tischplatte zweckmäßig sein, wenn das wandseitige Tischplattensegment 2 aus der Nutzstellung nach oben in die Ruhestellung klappbar ist. Im allgemeinen wird die Anordnung zweckmäßigerweise so gewählt, daß eine Handhabe 12 zum Ausschwenken des Tisches aus der Ruhestellung an der Unterseite der Tischplatte angeordnet ist. Dies ist jedoch nicht unbedingt so, beispielsweise falls eine Betätigungshandhabe 12 nicht vorgesehen ist.

Soll der Tisch vom Ruhe- in den Nutzzustand gebracht werden, so wird wie folgt vorgegangen. Das wandferne Plattensegment 1 wird mit Hilfe der Handhabe 12 etwas herausgeschwenkt und dann beide Segmente 1, 2 durch Klappen um die Achsen 3, 4 ausgeschwenkt. Fig. 1 zeigt eine Zwischenstellung während dieses Ausschwenkvorganges. Die Segmente 1, 2 werden bis zu der in Fig. 2 gezeigten miteinander fluchtenden und etwa horizontalen Nutzstellung ausgeschwenkt. Im Anschluß daran wird das eingezogene Tischbein 9 von seiner eingeklappten Stellung, in der es parallel zur Unterseite des Segments 1 angeordnet ist, um das Scharnier 11 ausgeklappt. Im Anschluß daran wird das Tischbein 9 teleskopartig ausgezogen, so daß es die Tischplatte im Nutzzustand abstützt.
Am Fußpunkt des Tischbeins 9 sind im Inneren desselben Züge 13, beispielsweise ein Zugdrähte oder Zugseile, angebracht. Die Züge laufen durch das Tischbein 9 bis zur Tischplatte und innerhalb derselben weiter durch Bohrungen in den Tischplattensegmenten 1, 2 fast über die gesamte Länge der Tischplatte. Dabei durchlaufen die Züge 13 die Rohre 10, 10' zur Verriegelung der Tischplattensegmente. Die Züge 13 sind mit den Rohren 10, 10' fest verbunden. Nach dem Durchtritt durch die Rohre 10, 10' werden die Züge 13 am Punkt 14 umgelenkt und sind an ihrem Ende mit einem Ende 15 einer Gasdruckfeder 16 verbunden. Beim Ausfahren der Teleskopstütze 9 wird das bodenseitige Teleskopelement nach unten verfahren, wodurch die Züge 13 entsprechend mitgezogen werden. Über die Umlenkung am Punkt 11 werden die Züge 13 im Inneren der Tischplatte mitgezogen. Die an den Zügen befestigten Rohre 10, 10' werden von ihrer entriegelten Position innerhalb des wandnahen Segmentes 2 in die die Segmente 1, 2 übergreifende Verriegelungsposition verschoben. Gleichzeitig wird die Gasdruckfeder 16 mit Hilfe der Züge 13 von der in Fig. 3 gezeigten entspannten Stellung in die in Fig. 4 gezeigte gespannte Stellung gebracht. Die Verriegelung der Tischplattensegmente 1, 2 erfolgt daher automatisch infolge des kinematische Kopplung an das Ausziehen der Teleskopstütze 9; zusätzliche Handgriffe sind nicht erforderlich. Je nach Ausgestaltung der Erfindung kann der Verriegelungsvorgang auch an das Ausklappen des Tischbeins 9 oder das Ausschwenken des Tischplattensegments 2 um die Achse 4 kinematisch gekoppelt sein. Auch eine Betätigung mit Hilfe von Fremdkraft, die während des Aufbauvorgangs ausgelöst wird, ist möglich.

Beim Versetzen des Tisches vom Nutzzustand in den Ruhezustand wird in umgekehrter Reihenfolge vorgegangen. Die Entriegelung der Segmente 1, 2 erfolgt im Ausführungsbeispiel der Fig. 1 bis 4 mit Hilfe von Fremdkraft, hier mit Hilfe der gespannten Gasdruckfeder 16. Die Auslösung der Gasdruckfeder führt zu einer Entspannung derselben, d. h. sie fährt vom in Fig. 4 gezeigten gespannten Zustand in den in Fig. 3 gezeigten entspannten Zustand. Dabei werden die Züge 13 in Richtung Wand gezogen und mit ihnen die daran befestigten Rohre 10, 10' in die entriegelte Stellung innerhalb des wandnahen Segments 2 verschoben. In dieser entriegelten Stellung sind die Tischplattensegmente 1, 2 relativ zueinander klappbar. Die Auslösung der Feder 16 kann an das Einfahren der Teleskopstütze 9, das Einklappen derselben um den Punkt 11 oder das Einklappen der noch verriegelten Tischplatte 1, 2 um die Achse 4 gekoppelt sein. Selbstverständlich kann die Entriegelung anstelle mit Fremdkraft auch durch kinematische Koppelung erfolgen. Die Bohrungen zur Aufnahme der Züge 13, die Gasdruckfeder 16 und die Rohre 10, 10' samt zugeordneten Führungsrohren sind vollständig innerhalb der Tischplatte 1, 2 bzw. dem Tischbein 9 angeordnet.

An der Unterseite des wandnahen Plattensegmentes 2 ist über ein Winkelstück 17 eine Blende 18 angelenkt. Die Blende 18 ist eine Platte, deren Länge und Breite etwa derjenigen eines Tischplattensegmentes 1, 2 entspricht. In einer Entfernung von mehr als der Hälfte der Blendenlänge von dem Anlenkungspunkt 19 an dem Plattensegment 2 ist eine Gasdruckfeder 20 an der Blende 18 angelenkt, die an ihrem entgegengesetzten Ende am Gehäuseteil 6 angelenkt ist. Die Anordnung der Gasdruckfeder ist so, daß die Verlängerung ihrer Längsachse etwa durch den Anlenkpunkt 19 läuft bzw. nicht weit davon abweicht.

In der Ruhestellung des Tisches ist die Blende hinter den beiden Tischplattensegmenten 1 und 2 in einer etwa zu diesen parallelen Lage im Gehäuse 5 - 8 verstaut, wobei sich die Druckfeder 20 im komprimierten, gespannten Zustand befindet. Beim Ausschwenken des Plattensegments 2 wird die Tischplatte über den Anlenkpunkt 19 am oberen Ende nach oben und zur Flugzeugkabine hin nachgeführt. Infolge der Aufwärtsbewegung kommt es zur Entspannung der Gasdruckfeder 20, so daß der Ausschwenkvorgang durch die von der Gasdruckfeder 20 erzeugte Fremdkraft unterstützt wird. Kurz vor der horizontalen Position des Plattensegments 2 schlägt das Winkelelement 17 an der Unterseite des Plattensegments an. Die letzte kurze Schwenkbewegung des Plattensegments 2 in die horizontale Lage bewirkt dann die horizontale Nachführung der Blende 18 an ihrem unteren Ende. In der horizontalen Nutzstellung der Tischplatte 1, 2 verschließt die Blende 18 die von den Gehäuseteilen 5, 8 gebildete Öffnung des Gehäuses 5 - 8. Sie nimmt etwa die Position ein, die das wandferne Plattensegment 1 in der Ruhestellung des Tisches einnimmt. Das Gehäuse 5 - 8 ist im wesentlichen bündig abgeschlossen, so daß der Innenraum, insbesondere die Gasdruckfeder 20 vor Verschmutzung geschützt ist. Der störende Eindruck einer gähnenden Öffnung wird vermieden. Die Blende 18 fluchtet mit den Gehäuseteil 8.

Beim Einschwenken des Plattensegments 2 wird die Blende 18 über den Winkel nach unten und zum Gehäuse hin geschoben. Diese Bewegung führt zu einer Spannung der Gasdruckfeder 20. Gegen Ende der Einklappbewegung wird die Blende 18 hauptsächlich an ihrem oberen Ende horizontal nach innen versetzt. Sie gelangt so in ihre Ruhestellung. Auf die geschilderte Weise ist die Bewegung der Blende 18 von ihrer Ruhestellung in die die Öffnung des Gehäuses 5 - 8 bündig abschließende Stellung kinematisch an die Schwenkbewegung des Tischplattensegments 2 von der Ruhestellung zur ausgeschwenkten Nutzstellung gekoppelt. Entsprechendes gilt umgekehrt für die Bewegung von der Nutz- in die Ruhestellung. Die von der Blende 18 durchlaufene Bahn ist dabei nicht eindeutig festgelegt. So unterscheidet sich beim Ausführungsbeispiel der Fig. 1 bis 4 die beim Ausschwenken durchlaufene Bahn geringfügig von der beim Einschwenken durchlaufenen Bahn.

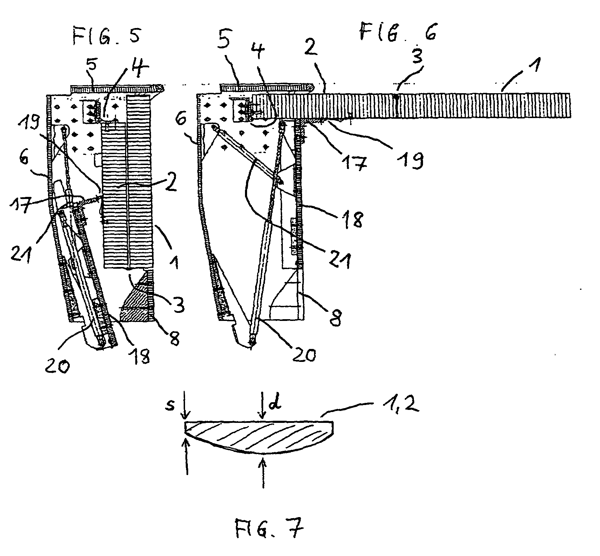

Das in den Fig. 5 bis 7 gezeigte Ausführungsbeispiel betrifft einen Wandtisch ohne Tischbein. Die Tischplattensegmente 1, 2 weisen mindestens in der Tischmitte eine beträchtliche Dicke auf. Das wandferne Plattensegment 1 stützt sich im Nutzzustand aufgrund des oben liegenden Scharniers 3 und der Dicke der Tischplattensegmente am wandnahen Tischplattensegment 2 ab, ohne daß es einer Verriegelungsvorrichtung bedarf. Das Tischplattensegment 2 ist in der Nutzstellung in etwa horizontaler Nutzstellung arretiert, bspw. über eine Arretierung der Gasfeder 20. Das Gehäuse 5 - 8 ist in die Bordwand eines Flugzeugs integriert.

Die kinematische Koppelung zwischen der Blende 18 und dem Plattensegment 2 unterscheidet sich geringfügig von derjenigen des vorigen Ausführungsbeispiels. Die die Tischplatte unterstützende Gasdruckfeder 20 ist am oberen Ende der Blende 18 an dieser angelenkt. Es ist eine zweite Gasdruckfeder 21 vorgesehen. Beim Einschwenken des Plattenteils 2 von der Nutzstellung führt die Gasdruckfeder 21 dazu, daß die Blende 18 nach unten versetzt wird. Die Gasdruckfeder 21 kompensiert die Abweichung der von der Gasdruckfeder 20 gebildeten Achse vom Anlenkungspunkt 19. In der Fig. 5 gezeigten Ruhestellung ist die Blende 18 in einer zur vertikalen leicht geneigten Position erheblich unterhalb der Position der Tischplattensegmente 1, 2 angeordnet.
Die Dicke d der Tischplattensegmente 1, 2 in der Tischmitte ist erheblich größer als die Dicke s an den Längsseiten. Auf diese Weise wird dem Benutzer der optische Eindruck eines leichten Tisches der Dicke s vermittelt, während die Dicke d in der Tischmitte zu einer erheblichen Versteifung und Erhöhung der Festigkeit führt. Das Verhältnis d zu s beträgt etwa 2.5. Die unterschiedlichen Dicken werden vorzugsweise durch eine konvexe Formung der Tischplattenunterseite hervorgerufen. Die Tischplatte kann am wandfernen Ende beispielsweise auf die Dicke s abgeflacht sein.

## Patentansprüche

1. Tisch zur Anbringung an der Wand eines Flugzeugs oder dergleichen, mit einer Tischplatte (1, 2), die von einem im wesentlichen parallel zur Wand ausgerichteten Ruhezustand in einen im wesentlichen horizontalen Nutzzustand schwenkbar ist, wobei wenigstens ein Teil (1) der Tischplatte (1, 2) im Ruhezustand eine Abschlussblende einer Öffnung eines den Tisch im Ruhezustand aufnehmenden Gehäuses (5 - 8) bildet und **dadurch gekennzeichnet, dass** eine separate Blende (18) diese Öffnung im Nutzzustand wenigstens teilweise abdeckt, wobei diese separate Blende (18) durch das Schwenken des Tisches vom Ruhe- in den Nutzzustand automatisch in ihre die Gehäuseöffnung abdeckende Stellung verfahrbar ist.

2. Tisch nach Anspruch 1, **dadurch gekennzeichnet, dass** die separate Blende die genannte Öffnung im Nutzzustand bündig abschliebt.

3. Tisch nach Anspruch 1 oder 2, **dadurch gekennzeichnet, dass** das Verfahren der separaten Blende (18) kinematisch mit der Schwenkbewegung des Tisches vom Ruhein den Nutzzustand gekoppelt ist.

4. Tisch nach einem der Ansprüche 1 bis 3, **dadurch gekennzeichnet, dass** die separate Blende (18) zur Unterstützung der Tischplatte (1, 2) im Nutzzustand und/oder beim Schwenken vom Ruhe- in den Nutzzustand dient.

5. Tisch nach einem der Ansprüche 1 bis 4, **dadurch gekennzeichnet, dass** die Tischplatte (1, 2) im Nutzzustand und/oder beim Schwenken vom Ruhe- in den Nutzzustand mit Hilfe von Fremdkraft, vorzugsweise mithilfe einer vorgespannten Feder (20) unterstützt wird.

6. Tisch nach einem der Ansprüche 1 bis 5, **dadurch gekennzeichnet, dass** die separate Blende (18) im Ruhezustand hinter der Tischplatte (1, 2) und etwa parallel zu dieser angeordnet ist.

7. Tisch nach einem der Ansprüche 1 bis 6, **dadurch gekennzeichnet, dass** die Dicke der Tischplatte (1, 2) um mindestens einen Faktor 1.5, vorzugsweise etwa 2.5 von den Längsseiten zur Tischmitte hin zunimmt.

8. Tisch nach einem der Ansprüche 1 bis 7, **dadurch gekennzeichnet, dass** die Tischplatte wenigstens zwei relativ zueinander klappbare Tischplattensegmente (1, 2) aufweist, die von einem im wesentlichen parallel zur Wand ausgerichteten Ruhezustand in einen im wesentlichen horizontalen Nutzzustand schwenkbar sind, und dass eine Verriegelungseinrichtung (10,10') zur miteinander fluchtenden Verriegelung der Tischplattensegmente (1,2) vorgesehen ist, die durch das Versetzen des Tisches vom Ruhe- in den Nutzzustand automatisch in die Verriegelungsstellung fährt.

9. Tisch nach Anspruch 8, **dadurch gekennzeichnet, dass** die Verriegelungseinrichtung (10, 10') durch das Versetzen des Tisches vom Nutz- in den Ruhezustand automatisch in die Entriegelungsstellung fährt.

10. Tisch nach Anspruch 8 oder 9, **dadurch gekennzeichnet, dass** eine kinematische Koppelung zwischen der Bewedung des Tisches vom Ruhe- in den Nutzzustand, und/oder umgekehrt, und der Verriegelung bzw. Entriegelung der Verriegelungseinrichtung (10, 10') vorgesehen ist.

11. Tisch nach einem der Ansprüche 8 bis 10, **dadurch gekennzeichnet, dass** er wenigstens ein klappbares und/oder ausziehbares Tischbein (9) an wenigstens einem Tischplattensegment (1, 2) aufweist.

12. Tisch nach Anspruch 10 und 11, **dadurch gekennzeichnet, dass** die kinematische Koppelung durch das klappbare und/oder ausziehbare Tischbein (9) erfolgt.

13. Tisch nach Anspruch 8 oder 9, **dadurch gekennzeichnet, dass** die Verriegelungseinrichtung (10, 10') von einer Fremdkraft in die Verriegelungsstellung und/oder in die Entriegelungsstellung gebracht wird.

14. Tisch nach Anspruch 13, **dadurch gekennzeichnet, dass** die Fremdkraft durch ein vorgespanntes Federelement (16) erzeugt wird.

15. Tisch nach Anspruch 14, **dadurch gekennzeichnet, dass** die Vorspannung durch das Versetzen des Tisches vom Ruhe- in den Nutzzustand, und/oder umgekehrt, erzeugt wird.

16. Tisch nach einem der Ansprüche 8 bis 15, **dadurch gekennzeichnet, dass** die Verriegelungseinrichtung Verriegelungselemente (10, 10') in Form von Stangen und/oder Rohren umfasst.

17. Tisch nach einem der Ansprüche 8 bis 16, **dadurch gekennzeichnet, dass** die Verriegelungseinrichtung (10, 10') im Inneren der Tischplatte (1, 2) angeordnet ist.

## Claims

1. A table for mounting on the wall of an aircraft or the like, with a table board (1,2) which can be pivoted from a rest position aligned substantially parallel to the wall into a substantially horizontal use position, wherein at least one part (1) of the table board (1,2) in the rest position forms a closure screen of an opening of a housing (5,8) accommodating the table in the rest position, **characterised in that** a separate screen (18) at least partly covers this opening in the use position, wherein by the pivoting of the table from the rest position into the use position this separate screen (18) can be moved automatically into its position covering the housing opening.

2. A table according to Claim 1, **characterised in that** the separate screen closes flush with said opening in the use position.

3. A table according to Claim 1 or 2, **characterised in that** the movement of the separate screen (18) is coupled kinematically with the pivoting movement of the table from the rest position into the use position.

4. A table according to any one of Claims 1 to 3, **characterised in that** the separate screen (18) serves to support the table board (1,2) in the use position and/or while pivoting from the rest position into the use position.

5. A table according to any one of Claims 1 to 4, **characterised in that** in the use position and/or in pivoting from the rest position into the use position the table board (1,2) is supported by means of an external force, preferably by means of a preloaded spring.

6. A table according to any one of Claims 1 to 5, **characterised in that** in the rest position the separate screen (18) is disposed behind and approximately parallel to the table board (1,2).

7. A table according to any one of Claims 1 to 6, **characterised in that** the thickness of the table board (1,2) increases by at least a factor of 1.5, preferably of approximately 2.5, from the longitudinal sides towards the table centre.

8. A table according to any one of Claims 1 to 7, **characterised in that** the table board has at least two table board sections (1,2) which can be folded relative to one another and which can be pivoted from a rest position aligned substantially parallel to the wall into a substantially horizontal use position, and **in that** a locking device-(10,10') is provided for the mutually aligned locking of the table board sections (1,2) and which is automatically moved into the locking position by the displacement of the table from the rest position into the use position.

9. A table according to Claim 8, **characterised in that** the locking device (10,10') is automatically moved into the unlocking position by the displacement of the table from the use position into the rest position.

10. A table according to Claim 8 or 9, **characterised in that** a kinematic coupling is provided between the movement of the table from the rest position into the use position, and/or vice versa, and the locking or unlocking of the locking device (10,10').

11. A table according to any one of Claims 8 to 10, **characterised in that** it has at least one collapsible and/or extendable table leg (9) on at least one table board section (1,2).

12. A table according to Claims 10 and 11, **characterised in that** the kinematic coupling is effected by the collapsible and/or extendable table leg (9).

13. A table according to Claim 8 or 9, **characterised in that** the locking device (10,10') is brought by an external force into the locking position and/or into the release position.

14. A table according to Claim 13, **characterised in that** the external force is generated by a preloaded spring element (16).

15. A table according to Claim 14, **characterised in that** the preloading is brought about by displacing the table from the rest position into the use position, and/or vice versa.

16. A table according to any one of Claims 8 to 15, **characterised in that** the locking device comprises locking elements (10,10') in the form of rods and/or tubes.

17. A table according to any one of Claims 8 to 16, **characterised in that** the locking device (10,10') is disposed inside the table board (1,2).

## Revendications

1. Table destinée à être montée contre la paroi d'un avion ou élément similaire, comportant un plateau de table (1, 2), pouvant pivoter d'une position de repos, orientée sensiblement parallèlement à la paroi, dans une position de service sensiblement horizontale, au moins une partie (1) du plateau de table (1, 2) formant dans la position de repos un panneau de fermeture d'une ouverture d'un boîtier (5-8) recevant la table en position de repos, **caractérisée en ce qu'**un panneau (18) séparé ferme au moins en partie cette ouverture dans la position de service, ce panneau (18) séparé étant amené automatiquement dans sa position de fermeture de l'ouverture du boîtier par le pivotement de la table de la position de repos dans la position de service.

2. Table selon la revendication 1, **caractérisée en ce que**, dans la position de service, le panneau séparé ferme ladite ouverture en continuité avec la paroi.

3. Table selon la revendication 1 ou 2, **caractérisée en ce que** le déplacement du panneau (18) séparé est lié par couplage cinématique au mouvement de pivotement de la table de la position de repos dans la position de service.

4. Table selon l'une quelconque des revendications 1 à 3, **caractérisée en ce que** le panneau (18) séparé fait fonction de support du plateau de table (1, 2) dans la position de service et/ou pendant le pivotement de la position de repos dans la position de service.

5. Table selon l'une quelconque des revendications 1 à 4, **caractérisée en ce que** le plateau de table (1, 2) dans la position de service et/ou pendant le pivotement de la position de repos dans la position de service est supporté par une force extérieure, de préférence par un ressort (20) précontraint.

6. Table selon l'une quelconque des revendications 1 à 5, **caractérisée en ce que**, dans la position de repos, le panneau (18) séparé est situé derrière le plateau de table (1, 2) et à peu près parallèlement à celui-ci.

7. Table selon l'une quelconque des revendications 1 à 6, **caractérisée en ce que** l'épaisseur du plateau de table (1, 2) augmente au moins de 1,5 fois, de préférence environ 2,5 fois, à partir des côtés longitudinaux vers le centre de la table.

8. Table selon l'une quelconque des revendications 1 à 7, **caractérisée en ce que** le plateau de table comporte au moins deux segments de table (1, 2) pliables l'un par rapport à l'autre, qui peuvent pivoter à partir d'une position de repos, orientée sensiblement parallèlement à la paroi, dans une position de service sensiblement horizontale, et **en ce qu'**il est prévu un dispositif de verrouillage (10, 10'), qui est destiné à verrouiller les segments de table (1, 2) en alignement l'un avec l'autre et qui, par le basculement de la table de la position de repos dans la position de service, entre automatiquement dans la position de verrouillage.

9. Table selon la revendication 8, **caractérisée en ce que** le dispositif de verrouillage (10, 10') entre automatiquement dans la position de déverrouillage sous l'effet du basculement de la table de la position de service dans la position de repos.

10. Table selon la revendication 8 ou 9, **caractérisée en ce qu'**il est prévu un couplage cinématique entre le mouvement de la table, de la position de repos dans la position de service et/ou inversement, et le verrouillage ou déverrouillage du dispositif de verrouillage (10, 10').

11. Table selon l'une quelconque des revendications 8 à 10, **caractérisée en ce qu'**elle comporte au moins un pied de table (9) pliable et/ou escamotable sur au moins un segment de table (1, 2).

12. Table selon les revendications 10 et 11 **caractérisée en ce que** le couplage cinématique est assuré par le pied de table (9) pliable et/ou escamotable.

13. Table selon la revendication 8 ou 9, **caractérisée en ce que** le dispositif de verrouillage (10, 10') est amené par une force extérieure dans la position de verrouillage et/ou dans la position de déverrouillage.

14. Table selon la revendication 13, **caractérisée en ce que** la force extérieure est générée par un ressort (16) précontraint.

15. Table selon la revendication 14, **caractérisée en ce que** la précontrainte est générée par le basculement de la table de la position de repos dans la position de service et/ou inversement.

16. Table selon l'une quelconque des revendications 8 à 15, **caractérisée en ce que** le dispositif de verrouillage comporte des éléments de verrouillage (10, 10') en forme de tiges et/ou de tubes.

17. Table selon l'une quelconque des revendications 8 à 16, **caractérisée en ce que** le dispositif de verrouillage (10, 10') est agencé à l'intérieur du plateau de table (1, 2).
